# EUROPÄISCHE PATENTSCHRIFT

(11) **EP 0 610 545 B1**
(45) Veröffentlichungstag und Bekanntmachung des Hinweises auf die Patenterteilung: **12.08.1998**
(21) Anmeldenummer: 93114796.1
(22) Anmeldetag: 15.09.1993
(51) Int. Cl.: B01D 29/11, B01D 29/96, B01D 27/08, B01D 46/24

(54) **Patronenfilter**
Filter cartridge
Cartouche filtrante

(30) Priorität: 11.02.1993 DE 4304036
(43) Veröffentlichungstag der Anmeldung: 17.08.1994
(73) Patentinhaber: Firma Carl Freudenberg, 69469 Weinheim (DE)
(72) Erfinder: Adolph, Jürgen, D-64589 Stockstadt (DE); Pfeuffer, Peter, D-68775 Ketsch (DE); Hofmann, Margit, D-69517 Gorxheimertal (DE); Wiegand, Hans, D-64658 Fürth (DE)

(56) Entgegenhaltungen:
- DE-U- 9 204 169
- US-A- 5 045 194

## Beschreibung

Die Erfindung betrifft eine Patronenfilteranordnung, umfassend ein Gehäuse mit einem darin festlegbaren Patronenfilter, mit einem Filtereinsatz von im wesentlichen zylindrischer Gestalt sowie einen Halteflansch, der mit einem Ende des Filtereinsatzes verbunden ist, wobei der Halteflansch in einen Stützring einfügbar ist und durch den Stützring entlang einer in sich geschlossenen Umfangsfläche an das Gehäuse anpreßbar ist, wobei der Stützring mit einer innenumfangsseitig umlaufenden Ausnehmung versehen ist, die eine Hinterschneidung bildet und wobei der Halteflansch lösbar in die Ausnehmung einfügbar ist.

Eine solche Patronenfilteranordnung ist aus der US 5045194 A bekannt.

Eine ähnliche Patronenfilteranordnung ist auch aus dem DE 92 04169 U bekannt. Die vorbekannte Filterpatrone gelangt beispielsweise in Entstaubungsanlagen zur Anwendung, wobei der Filtereinsatz in axialer Richtung beiderseits mit einer Kunststoffeinfassung versehen ist.

Ein weiteres Patronenfilter ist aus der Publikation "Filterpatronen für bessere Luft", SF Airfiltration AG, Schweiz, bekannt. Die in dem Prospekt gezeigten Patronenfilter sind im Bereich ihrer stirnseitigen Enden mit einem Kunststoffflansch und einem Kunststoffboden versehen, wobei der Kunststoffflansch in radialer Richtung außenseitig mit einstückig angeformten Haltenasen versehen ist, die gleichmäßig in Umfangsrichtung verteilt sind. Die Haltenasen sind mit Ausnehmungen versehen, um den Patronenfilter an dem Gehäuse zu befestigen. Eine derartige Befestigung ist in fertigungstechnischer Hinsicht wenig befriedigend. Relaxationserscheinungen des Kunststoffflanschs, der gleichzeitig als Dichtung ausgebildet ist, können mit zunehmender Gebrauchsdauer zu einer Lageveränderung des Filters innerhalb des Gehäuses führen und durch eine nachlassende Anpreßkraft zu Undichtigkeiten im Bereich der Dichtflächen.

Der Erfindung liegt die Aufgabe zugrunde, eine Patronenfilteranordnung der eingangs genannten Art derart weiterzuentwickeln, daß sie in fertigungstechnischer Hinsicht einfacher und kostengünstiger herstellbar ist und daß der Patronenfilter während einer langen Gebrauchsdauer mit gleichbleibender Anpreßkraft dicht an dem Gehäuse festgelegt ist.

Insbesonders wird die Montage dadurch vereinfacht, daß der Stützring und der mit dem Halteflansch verbundene Filtereinsatz eine vormontierbare Einheit bilden.

Diese Aufgabe wird mit den kennzeichnenden Merkmalen von Anspruch 1 gelöst. Auf vorteilhafte Ausgestaltungen nehmen die Unteransprüche Bezug.

Ausgehend von einer Patronenfilteranordnung gemäß dem Oberbegriff von Anspruch 1 ist es vorgesehen, daß die Hinterschneidung zumindest einen einfederbaren Vorsprung umfaßt und daß der Vorsprung mit einer außenumfangsseitig angeordneten Eintiefung des Halteflanschs in Eingriff bringbar ist und daß der Halteflansch durch den Stützring entlang einer in sich geschlossenen Umfangsfläche an das Gehäuse anpreßbar ist. Hierbei ist von Vorteil, daß der Halteflansch, der zumeist aus einem polymerem Werkstoff besteht, nicht mit Haltevorrichtungen versehen ist, um am Gehäuse festgelegt zu werden. Desweiteren ist von Vorteil, daß für den Halteflansch ein Material gewählt werden kann, das besonders einfach mit dem Filtereinsatz verbunden werden kann, ohne daß die Materialauswahl durch weitere Aufgaben des Halteflanschs, beispielsweise eine sichere Befestigung, negativ beeinflußt wird. Der Halteflansch wird in einen Stützring aus einem nichtkriechenden Werkstoff eingefügt und durch den Stützring dicht an das Gehäuse gepreßt. Die Montage der Filterpatrone kann in jeder beliebigen Lage erfolgen, wobei das Eigengewicht der Filterpatrone stets von dem Stützring oder dem Gehäuse aufgenommen wird. Durch die rotationssymmetrische Gestalt des Halteflanschs ist die Herstellung der Filterpatrone besonders einfach, wobei sich eine Werkstoffeinsparung dadurch ergibt, daß Haltevorrichtungen zur Montage der Filterpatrone am Gehäuse nicht vorgesehen sind.

Der Stützring ist mit einer innenumfangsseitig umlaufenden Ausnehmung versehen, wobei der Halteflansch in die Ausnehmung einfügbar ist. Hierbei ist von Vorteil, daß der Patronenfilter durch den Stützring geführt und während der gesamten Gebrauchsdauer in einer übereinstimmenden Position, bezogen auf das Gehäuse, gehalten wird. Desweiteren ist von Vorteil, daß durch diese Ausgestaltung der Halteflansch von dem Stützring weitgehend umschlossen ist und daß der Halteflansch dadurch vor Beschädigungen und Verunreinigungen durch äußere Einflüsse weitgehend geschützt ist.

Der Halteflansch und der Stützring sind lösbar aneinander festgelegt. Durch diese Ausgestaltung kann der Patronenfilter im Anschluß an einen Austausch problemlos der Wiederverwertung zugeführt werden. Der Stützring kann dadurch beliebig oft wiederverwendet werden. Durch die lösbare Verbindung von Halteflansch und Stützring können die Patronenfilter außerdem platzsparend gelagert werden, zumal die platzsparende Lagerung zusätzlich dadurch begünstigt wird, daß Befestigungsvorrichtungen am Halteflansch nicht vorgesehen sind.

Der Stützring ist mit einer Hinterschneidung zur lösbaren Festlegung des Halteflanschs versehen, wobei die Hinterschneidung zumindest einen einfederbaren Vorsprung umfaßt. Die Montage des erfindungsgemäßen Patronenfilters ist dadurch vereinfacht. Bevor dieser in das Gehäuse eingesetzt und anschließend an diesem festgelegt wird, können der Stützring und der Halteflansch durch die Hinterschneidung miteinander verbunden werden. Die so gebildete Montageeinheit wird anschließend in das Gehäuse eingesetzt und mit diesem verbunden. Durch die Hinterschneidung und den einfederbaren Vorsprung ist die räumliche Zuordnung beider Teile zueinander stets von übereinstimmender Güte, wobei die Gefahr von Montagefehlern durch diese Ausgestaltung deutlich reduziert ist.

Der Halteflansch kann mit zumindest einer elastisch zusammenpreßbaren ersten Dichtlippe auf der dem Gehäuse zugewandten Seite versehen sein. In Abhängigkeit von den Einsatzbedingungen und dem zu filternden Medium kann es sich als vorteilhaft erweisen, wenn der Halteflansch in axialer Richtung gegenüber dem Stützring und/oder dem Gehäuse abgedichtet ist.

Nach einer weiteren Ausgestaltung besteht die Möglichkeit, daß der Halteflansch mit zumindest einer elastisch zusammenpreßbaren zweiten Dichtlippe auf der von dem Gehäuse abgewandten Seite versehen ist. Die erste und die zweite Dichtlippe können beispielsweise einstückig ineinander übergehend mit dem Halteflansch hergestellt oder separat erzeugt sein. Die separat erzeugten Dichtlippen, können vor der Montage des Patronenfilters mit dem Halteflansch adhäsiv verbunden werden. Durch die Festlegung der Dichtlippen am Halteflansch wird die Montage des Patronenfilters durch eine Minimierung der aneinander festzulegenden Teile vereinfacht. Durch die erste und zweite Dichtlippe ist auch unter extremen Einsatzbedingungen gewährleistet, daß das gefilterte Medium so wenig Verunreinigungen wie möglich enthält.

Die Eintiefung des Halteflanschs kann umlaufend und nutförmig gestaltet sein.

Nach einer vorteilhaften Ausgestaltung kann das Gehäuse im Bereich des äußeren Umfangs des Stützrings mit zumindest zwei Haltenocken versehen sein, wobei der Stützring mit den Haltenocken zugeordneten und im gleichen Drehsinn in Umfangsrichtung offenen Ausnehmungen versehen sein kann und wobei die Haltenocken durch eine Relativverdrehung des Stützringes mit den Ausnehmungen in Eingriff bringbar sind. Die Handhabung der Patronenfilter ist durch einen derartigen Bajonettverschluß sehr einfach, da Werkzeuge für die Montage des Patronenfilters im Gehäuse entbehrlich sind. Die Haltenocken können beispielsweise mit dem Gehäuse verschraubt sein und auf der dem Gehäuse abgewandten Seite einen in radialer Richtung vorstehenden Wulst aufweisen. Die Ausnehmungen des Stützringes werden dann derart mit den Haltenocken in Eingriff gebracht, daß der Halteflansch oder die am Halteflansch zusammenpreßbaren Dichtlippen unter axialer Vorspannung zwischen dem Stützring und dem Gehäuse dichtend angeordnet ist. Die Ausnehmungen umschließen die Haltenocken bevorzugt zumindest entlang ihres halben Umfangs. Durch die axiale Vorspannung des Halteflanschs und die reibschlüssige Verbindung zwischen den aneinander festgelegten Teilen wird ein Verdrehen des Stützringes relativ zum Gehäuse zuverlässig ausgeschlossen. Die Haltenocken und die Ausnehmungen sind bevorzugt gleichmäßig in Umfangsrichtung verteilt.

Der Gegenstand der vorliegenden Erfindung wird nachfolgend anhand der beigefügten Zeichnungen weiter verdeutlicht.

In Fig. 1 ist ein Ausführungsbeispiel eines erfindungsgemäßen Partronenfilters in geschnittener Darstellung entlang der Linie A - A aus Fig. 2 gezeigt.

In Fig. 2 ist der Patronenfilter aus Fig. 1 in einer Ansicht von oben dargestellt.

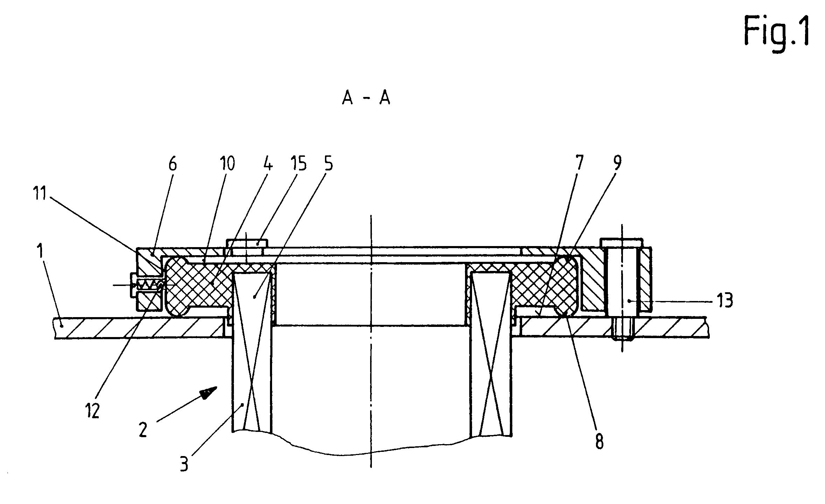

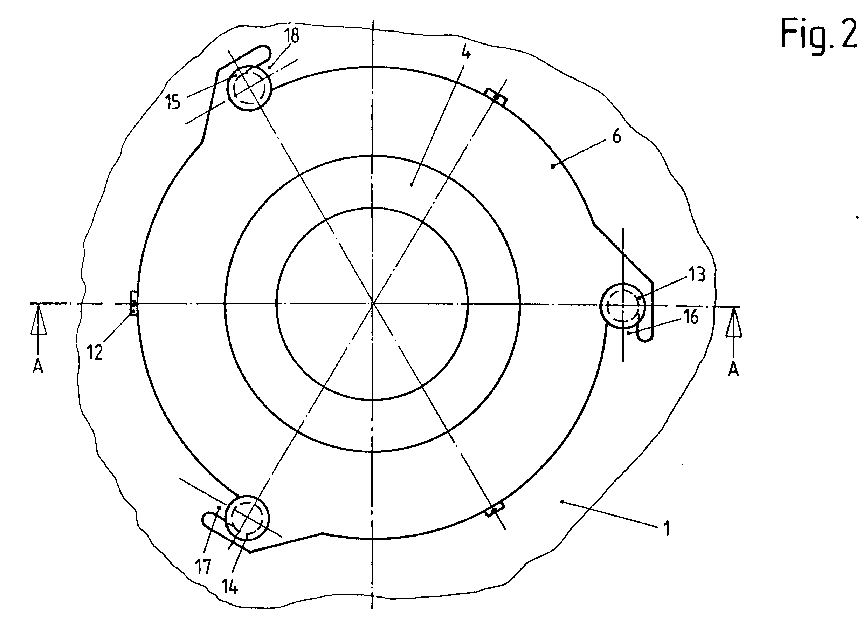

In Fig. 1 ist ein Ausschnitt aus einem Ausführungsbeispiel des erfindungsgemäßen Patronenfilters 2 gezeigt, der in einem Gehäuse 1 befestigt ist. Der Patronenfilter 2 ist im wesentlichen zweiteilig ausgebildet, wobei der Filtereinsatz 3 einstückig ineinander übergehend mit einem Halteflansch 4 ausgeführt ist. Der Halteflansch 4 besteht aus einem polymerem Werkstoff, der das stirnseitige Ende 5 des Filtereinsatzes 3 formschlüssig umschließt. Zur Festlegung des Filtereinsatzes 3 im Gehäuse 1 ist ein Stützring 6 vorgesehen, der mit Ausnehmungen 16, 17, 18 versehen ist, die nach einer Relativverdrehung des Stützringes 6 bajonettartig mit Haltenocken 13, 14, 15, die mit dem Gehäuse 1 verbunden sind, in Eingriff bringbar sind. Der Filtereinsatz 3 und der Halteflansch 5 sind rotationssymmetrisch ausgebildet und durch ihre einfache Gestalt in fertigungstechnischer und wirtschaftlicher Hinsicht günstig herstellbar. Zur Abdichtung des Halteflanschs 4 zwischen dem Stützring 6 und dem Gehäuse 1 sind in diesem Ausführungsbeispiel erste und zweite Dichtlippen 8, 9 vorgesehen, die die aneinander festgelegten Teile im montierten Zustand gegeneinander abdichten. Die Festlegung der Dichtlippen 8, 9 am Halteflansch 4 kann auf unterschiedliche Weise erfolgen, beispielsweise dadurch, daß die Dichtlippen 8, 9 als Schnurring ausgebildet sind, die in eine Nut des Halteflanschs einlegbar sind. In diesem Ausführungsbeispiel sind die Dichtlippen 8, 9 einstückig mit dem Halteflansch 4 ausgeführt. Um eine möglichst einfache Montage zu ermöglichen, können der Filtereinsatz 3 und der Halteflansch 4 in der Ausnehmung 10 des Stützringes 6 vormontiert werden. Der Stützring 6 wird in axialer Richtung soweit über den Halteflansch 4 geführt, bis der einfederbare Vorsprung 12 mit einer nutförmigen Eintiefung innerhalb des Halteflanschs 4 in Eingriff ist. Der Halteflansch 4 kann zu diesem Zwecke z.B. mit einer rillenförmigen Eintiefung versehen sein, die sich entlang des gesamten Außenumfangs des Halteflanschs 4 erstreckt. In diesem Ausführungsbeispiel sind drei einfederbare Vorsprünge 12 vorgesehen, die entlang des Stützrings 6 gleichmäßig in Umfangsrichtung verteilt sind. Sind die Vorsprünge 12 in die Eintiefung innerhalb des Halteflanschs 4 eingeschnappt, ergibt sich eine vorläufige Festlegung von Stützring 6 und Halteflansch 4 aneinander. Anschließend kann diese vormontierte Einheit in das Gehäuse 1 eingesetzt werden, wobei die Ausnehmungen 16, 17, 18 des Stützrings 6 mit Haltenocken 13, 14, 15 des Gehäuses 1 derart in Eingriff gebracht werden, wie in Fig. 2 dargestellt. Der Halteflansch 4 ist dann im Bereich der ersten und der zweiten Dichtlippe 8, 9 unter axialer Vorspannung dichtend zwischen dem Gehäuse 1 und dem Stützring 6 angeordnet. In diesem Ausführungsbeispiel bestehen das Gehäuse 1 und der Stützring 6 aus einer Leichtmetallegierung.

## Patentansprüche

1. Patronenfilteranordnung, umfassend ein Gehäuse (1) mit einem darin festlegbaren Patronenfilter (2), mit einem Filtereinsatz (3) von im wesentlichen zylindrischer Gestalt sowie einen Halteflansch (4), der mit dem Ende (5) des Filtereinsatzes (3) verbunden ist, wobei der Halteflansch (4) in einen Stützring (6) einfügbar ist, und durch den Stützring (6) entlang einer in sich geschlossenen Umfangsfläche (7) an das Gehäuse anpreßbar ist, wobei der Stützring mit einer innenumfangsseitig umlaufenden Ausnehmung (10) versehen ist, die eine Hinterschneidung (11) bildet und wobei der Halteflansch (4) lösbar in die Ausnehmung (10) einfügbar ist, dadurch gekennzeichnet, daß die Hinterschneidung (11) zumindest einen einfederbaren Vorsprung (12) umfaßt, daß der Vorsprung (12) mit einer außenumfangsseitig angeordneten Eintiefung des Halteflanschs (4) in Eingriff bringbar ist.

2. Patronenfilteranordnung nach Anspruch 1, dadurch gekennzeichnet, daß der Halteflansch (4) mit zumindest einer elastisch zusammenpreßbaren ersten Dichtlippe (8) auf der dem Gehäuse (1) zugewandten Seite versehen ist.

3. Patronenfilteranordnung nach Anspruch 1 bis 2, dadurch gekennzeichnet, daß der Halteflansch (4) mit zumindest einer elastisch zusammenpreßbaren zweiten Dichtlippe (9) auf der von dem Gehäuse (1) abgewandten Seite versehen ist.

4. Patronenfilteranordnung nach einem der Ansprüche 1 bis 3, dadurch gekennzeichnet, daß die Eintiefung des Halteflanschs (4) umlaufend und nutförmig gestaltet ist.

5. Patronenfilteranordnung nach einem der Ansprüche 1 bis 4, dadurch gekennzeichnet, daß das Gehäuse (1) im Bereich des äußeren Umfanges des Stützringes (6) mit zumindest zwei Haltenocken (13, 14, 15) versehen ist, daß der Stützring (6) mit den Haltenocken (13, 14, 15) zugeordneten und im gleichen Drehsinn in Umfangsrichtung offenen Ausnehmungen (16, 17, 18) versehen ist und daß die Haltenocken (13, 14, 15) durch eine Relativverdrehung des Stützringes (6) mit den Ausnehmungen (16, 17, 18) in Eingriff bringbar sind

## Claims

1. A cartridge filter arrangement, comprising a housing (1) with a cartridge filter (2) capable of being fixed therein, with a filter insert (3) of essentially cylindrical shape, and a holding flange (4) which is connected to the end (5) of the filter insert (3), the holding flange (4) being capable of being inserted into a supporting ring (6) and being capable of being pressed onto the housing by the supporting ring (6) along a circumferential surface (7) closed on itself, the supporting ring being provided with a recess (10) which runs round the inner circumference and which forms an undercut (11), and the holding flange (4) being capable of being inserted releasably into the recess (10), characterized in that the undercut (11) comprises at least one spring-in projection (12), and in that the projection (12) can be brought into engagement with a depression of the holding flange (4), the said depression being arranged on the outer circumference.

2. A cartridge filter arrangement according to Claim 1, characterized in that the holding flange (4) is provided with at least one elastically compressible first sealing lip (8) on the side facing the housing (1).

3. A cartridge filter arrangement according to either of Claims 1 and 2, characterized in that the holding flange (4) is provided with at least one elastically compressible second sealing lip (9) on the side facing away from the housing (1).

4. A cartridge filter arrangement according to any of Claims 1 to 3, characterized in that the depression of the holding flange (4) is designed to run round in the form of a groove.

5. A cartridge filter arrangement according to any of Claims 1 to 4, characterized in that the housing (1) is provided, in the region of the outer circumference of the supporting ring (6), with at least two holding bosses (13, 14, 15), in that the supporting ring (6) is provided with recesses (16, 17, 18) assigned to the holding bosses (13, 14, 15) and open circumferentially in the same direction of rotation, and in that the holding bosses (13, 14, 15) can be brought into engagement with the recesses (16, 17, 18) as a result of relative rotation of the supporting ring (6).

## Revendications

1. Cartouche filtrante, comprenant un boîtier (1) comportant une cartouche filtrante (2) pouvant être fixée dedans, avec un filtre de rechange (3) de configuration essentiellement cylindrique ainsi qu'une bride de retenue (4), qui est reliée à l'extrémité (5) du filtre de rechange (3), la bride de retenue (4) pouvant être insérée dans une bague d'appui (6) et pouvant être serrée contre le boîtier par la bague d'appui (6) le long d'une surface périphérique fermée en soi (7), la bague d'appui étant dotée d'un évidement circulaire sur la périphérie interne (10), qui forme une contre-dépouille (11) et la bride de retenue (4) pouvant être insérée de façon amovible dans l'évidement (10), caractérisée en ce que la contre-dépouille (11) comprend au moins une saillie (12) pouvant être comprimée par ressort (12), en ce que la saillie (12) peut être mise en prise avec un creusement, disposé sur la périphérie externe, de la bride de retenue (4).

2. Cartouche filtrante selon la revendication 1, caractérisée en ce que la bride de retenue (4) est dotée d'au moins une première lèvre d'étanchéité (8) pouvant être pressée de façon élastique sur le côté orienté vers le boîtier (1).

3. Cartouche filtrante selon les revendications 1 & 2, caractérisée en ce que la bride de retenue (4) est dotée d'au moins une deuxième lèvre d'étanchéité (9) pouvant être pressée de façon élastique sur le côté opposé au boîtier (1).

4. Cartouche filtrante selon l'une des revendications 1 à 3, caractérisée en ce que le creusement de la bride de retenue (4) est configuré de façon circulaire et en forme de rainure.

5. Cartouche filtrante selon l'une des revendications 1 à 4, caractérisée en ce que le boîtier (1) est doté dans la zone de la périphérie extérieure de la bague d'appui (6) d'au moins deux saillies de retenue (13, 14, 15), et en ce que la bague d'appui (6) est dotée d'évidements (16, 17, 18) associés aux saillies de retenue (13, 14, 15) et ouverts dans le même sens de rotation dans le sens périphérique et en ce que les saillies de retenue (13, 14, 15) peuvent être amenées en prise avec les évidements (16, 17, 18) par une rotation relative de la bague d'appui (6).
